# EUROPEAN PATENT APPLICATION

(11) **EP 4 711 483 A1**
(43) Date of publication of application: **18.03.2026**
(21) Application number: 24803517.2
(22) Date of filing: 09.05.2024
(51) Int. Cl.: C22C 30/00, C01B 3/04, C22C 19/05, C22C 27/06, C22C 38/00, C22C 38/58

(54) **HEAT RESISTANT ALLOY HAVING NITRIDING RESISTANCE**

(30) Priority: 10.05.2023 JP 2023077778; 08.05.2024 JP 2024075573
(71) Applicant: Kubota Corporation, Osaka 556-8601 (JP)
(72) Inventor: MURAKAMI, Yu, Hirakata-shi, Osaka 573-8573 (JP); INAGAKI, Takuya, Hirakata-shi, Osaka 573-8573 (JP); HASHIMOTO, Kunihide, Hirakata-shi, Osaka 573-8573 (JP)
(74) Representative: Müller-Boré & Partner Patentanwälte PartG mbB
(86) International application number: PCT/JP2024/017217
(87) International publication number: WO 2024/232408

(57) **Abstract**

The present invention provides a heat-resistant alloy that is excellent in nitriding resistance and high-temperature creep rupture strength. The heat-resistant alloy of the present invention comprises, in mass %, C: 0.2% to 0.6%, Si: greater than 0% to 2.5% or less, Mn: greater than 0% to 2.0% or less, P: 0.03% or less, S: 0.03% or less, Ni: 33.0% to 50.0%, Cr: 24.0% to 50.0%, with the remainder being Fe and impurities, and optionally including: Nb: greater than 0% to 1.8% or less, Rare Earth Elements: greater than 0% to 0.5% or less, Ti: greater than 0% to 0.5% or less and/or Zr: greater than 0% to 0.5% or less, W: greater than 0% to 2.0% or less and/or Mo: greater than 0% to 0.5% or less.

## Description

### TECHNICAL FIELD

The present invention relates to a heat-resistant alloy having excellent nitriding resistance.

### BACKGROUND ART

Decarbonization is required to achieve carbon neutrality. The use of hydrogen gas is attracting attention as a next-generation energy source that does not generate carbon dioxide. However, there are challenges in storing and transporting hydrogen gas safely and efficiently.

Therefore, expectations are placed on ammonia. Ammonia is a hydrogen carrier with high hydrogen density, is easy to liquefy for transport and storage, and can be imported stably from overseas. Although this ammonia can be used as fuel by burning it without cracking, the hydrogen gas obtained by thermally cracking ammonia is used in many technologies such as hydrogen power generation turbines, fuel cells, and hydrogen reduction steelmaking. For this reason, producing hydrogen by thermally cracking ammonia is very useful.

Patent Literature 1 discloses an ammonia thermal cracking apparatus that utilizes a catalyst. In this ammonia thermal cracking apparatus, ammonia gas preheated to about 300 °C to 700 °C is introduced into a reactor containing a catalyst, thereby thermally cracking the ammonia gas into hydrogen gas and nitrogen gas.

### PRIOR ART DOCUMENT (S)

### PATENT DOCUMENT

Patent Document 1: Japanese Patent Application Publication No. 2022-109042

### SUMMARY OF THE INVENTION

### PROBLEM TO BE SOLVED BY THE INVENTION

In ammonia gas, nitrogen atoms generated by thermal cracking diffuse into the alloy of the cracking tube and nitrides the alloy. For this reason, the heat-resistant alloy constituting the cracking tube is required to have a nitriding resistance. In general, Al, Cr, Mo, and Ti are elements that facilitate the ease of combining with nitrogen to form nitrides, while a higher Ni content makes nitriding more difficult.

For example, in nitriding equipment (gas nitriding furnaces) for gas nitriding of metals, stainless steels with a high Ni content or Ni-based alloys are used as furnace materials.

The hydrogen production process through ammonia cracking is desirably a high-pressure process. This is advantageous for reducing the volume of mass production facilities and for supplying to downstream processes such as power generation. "High pressure" used herein refers to a pressure higher than about 1.0 MPa, with higher pressures being more desirable. In this context, operating at high pressure requires the cracking tube to have a high-temperature creep rupture strength.

An object of the present invention is to provide a heat-resistant alloy that is excellent in a nitriding resistance and a creep rupture strength at high-temperature.

### MEANS FOR SOLVING THE PROBLEMS

The heat-resistant alloy of the present invention comprises, in mass %:
C: 0.2% to 0.6%,
Si: greater than 0% to 2.5% or less,
Mn: greater than 0% to 2.0% or less,
P: 0.03% or less,
S: 0.03% or less,
Ni: 33.0% to 50.0%,
Cr: 24.0% to 50.0%,
the remainder being Fe and impurities, and
optionally including:
   Nb: greater than 0% to 1.8% or less,
   Rare earth elements: greater than 0% to 0.5% or less,
   Ti: greater than 0% to 0.5% or less and/or Zr: greater than 0% to 0.5% or less,
   W: greater than 0% to 2.0% or less and/or Mo: greater than 0% to 0.5% or less.

The heat-resistant alloy preferably comprises:
C: 0.45% to 0.55%,
Si: greater than 0% to 1.5% or less,
Ni: 33.0% to 50.0%,
Cr: 24.0% to 27.0%,
Nb: greater than 0% to 1.0% or less.

The heat-resistant alloy preferably comprises:
C: 0.4% to 0.6%,
Si: greater than 0% to 2.0% or less,
Ni: 40.0% to 50.0%,
Cr: 24.0% to 38.0%,
Nb: 0.5% to 1.8%.

The heat-resistant alloy preferably comprises:
C: 0.2% to 0.5%,
Ni: 40.0% to 50.0%,
Cr: 30.0% to 50.0%,
and optionally, Ti: greater than 0% to 0.4% or less.

The creep rupture strength of the heat-resistant alloy is desirably 20 MPa or more at 900 °C for 1000 hours.

The activation energy for nitrogen diffusion in the heat-resistant alloy is desirably 35 kJ/mol or more.

The heat-resistant alloy is preferably a centrifugally cast body.

The heat-resistant alloy is preferably used in a high-temperature atmosphere of 500 ^{O}C or higher.

The cracking tube for an ammonia gas thermal cracking apparatus of the present invention can be formed from the above-described heat-resistant alloy.

### EFFECTS OF THE INVENTION

The heat-resistant alloy according to the present invention is excellent in nitriding resistance and high-temperature creep rupture strength. Therefore, it is suitable for cracking tubes of ammonia gas thermal cracking apparatuses used at high temperatures of 500 ^{O}C or higher. The cracking tube is particularly suitable for application in ammonia gas thermal cracking apparatuses used in high-pressure processes, which is advantageous for reducing the volume of mass production facilities and for supplying to downstream processes such as power generation.

### BRIEF DESCRIPTION OF THE DRAWINGS

Figure 1: Figure 1 is a cross-sectional photograph of the microstructure of the test piece of Comparative Example 1.
Figure 2: Figure 2 is a graph plotting the creep rupture strength and the thickness of the nitrided layer for the test pieces of the First Example.
Figure 3: Figure 3 is a graph plotting the creep rupture strength and activation energy for the test pieces of the second example.
Figure 4: Figure 4 shows EPMA images of the test pieces of Inventive Example 1 and Comparative Example 1.

### MODE TO CARRYING OUT THE INVENTION

Hereinafter, embodiments of the present invention will be described in detail. Unless otherwise specified, "%" means mass %.

The heat-resistant alloy with excellent nitriding resistance of the present invention is used, for example, as a cracking tube in an ammonia gas thermal cracking apparatus. The cracking tube, through which ammonia gas flows as the feedstock material, is heated from the outside between 500 °C and 1,000 ^{O}C in a catalyst-free environment, where thermal cracking, represented by 2NH₃ → N₂ + 3H₂, is performed to produce nitrogen gas and hydrogen gas.

The heat-resistant alloy with excellent nitriding resistance of the present invention comprises, in mass %:
C: 0.2% to 0.6%,
Si: greater than 0% to 2.5% or less,
Mn: greater than 0% to 2.0% or less,
P: 0.03% or less,
S: 0.03% or less,
Ni: 33.0% to 50.0%,
Cr: 24.0% to 50.0%,
with the remainder being Fe and impurities.

Hereinafter, the reasons for limiting the components will be explained.

### C: 0.2% to 0.6%

C has the effect of improving castability and increasing high-temperature creep rupture strength. It also has the effect of increasing high-temperature strength by forming carbides with Cr or optional elements such as Ti and Nb. Therefore, at least 0.2% is included. However, if the content of C is too high, primary carbides of Cr₇C₃ tend to form widely, and excessive precipitation of secondary carbides during heat treatment leads to a decrease in ductility and toughness. Therefore, the upper limit is set to 0.6%. The lower limit for C content is preferably 0.20%, 0.25%, and more preferably 0.30%. The upper limit for C content is preferably 0.60%, 0.55%, and more preferably 0.50%.

### Si: greater than 0% to 2.5% or less

Si is included as a deoxidizer in the molten alloy, to enhance the fluidity of the molten alloy, and to improve oxidation resistance. However, excessive addition of Si leads to a decrease in ductility, a decrease in high-temperature creep rupture strength, deterioration of the surface quality after casting, and a decrease in weldability. Therefore, the upper limit for Si content is set to 2.5%, preferably 2.0% and more preferably 1.7%.

### Mn: greater than 0% to 2.0% or less

Mn acts as a deoxidizer for the molten alloy, to fix S in the molten metal, thereby improving weldability and ductility. However, excessive addition of Mn leads to a decrease in high-temperature creep rupture strength and reduces oxidation resistance, so the upper limit is set to 2.0%. The Mn content is more preferably 1.5% or less.

### P: 0.03% or less, S: 0.03% or less

P and S are impurities that are unavoidably entered during melting, and a content of 0.03% or less is permissible. An amount of these impurities should be as low as possible, and it may be zero.

### Ni: 33.0% to 50.0%

Ni is an essential element for ensuring excellent nitriding resistance, as well as for securing cyclic oxidation resistance and microstructural stability, high-temperature creep strength, and for stabilizing the austenitization of the heat-resistant alloy. Ni also contributes to the improvement of high-temperature strength and oxidation resistance through combined addition with Cr, or W, Ti, and Zr to be optionally added. It is also known as an element that contributes to the improvement of nitriding resistance. This is because nitrogen hardly dissolves in Ni, and it is expected to have the effect of inhibiting the diffusion of nitrogen in the material. Therefore, at least 33.0% of Ni is included. On the other hand, even if Ni is added excessively, its effect saturates, and it is also economically disadvantageous, so the upper limit is set to 50.0%. The lower limit for Ni content is preferably 37.0%, and more preferably 40.0%.

### Cr: 24.0% to 50.0%

Cr contributes to the improvement of high-temperature strength and cyclic oxidation resistance. Furthermore, Cr, together with Ni and Fe, exhibits excellent heat resistance in high-temperature ranges exceeding 1000 ^{O}C. Additionally, Cr combines with C to form carbides, which has the effect of increasing high-temperature strength. Regarding nitriding, it is expected to provide the effect of suppressing the growth of the nitrided layer due to nitrogen diffusion by pinning nitrogen atoms through the formation of fine nitrides. Therefore, at least 24.0% is included. However, Cr is an element that is easy to combine with N, and the C in Cr carbides (Cr₂₃C₆) is replaced by N, causing nitriding of the alloy. Also, excessive formation of Cr carbides and Cr nitrides leads to a decrease in ductility, so a smaller content is preferable, and the upper limit is set to 50.0%. The lower limit for Cr content is 24.0%, and the upper limit for Cr content is preferably 50.0%, 46.0%, and more preferably 43.0%.

### Remainder Fe and impurities

The remainder is Fe and impurities. Impurities include those that are unavoidably mixed during melting. Fe is an element that facilitates the ingress and diffusion of nitrogen in the material, and a lower content is desirable for nitriding resistance. Although Fe is the remainder, it is desirable that the Fe content is up to 40.0%.

The heat-resistant alloy with the above composition may optionally contain the following elements.

### Nb: greater than 0% to 1.8% or less

Nb is an element that easily forms carbides and contributes to the improvement of creep rupture strength and high-temperature tensile strength. Nb also contributes to the improvement of aging ductility. Regarding nitriding resistance, similar to Cr, it is expected to have the effect of suppressing the growth of the nitrided layer due to nitrogen diffusion by pinning nitrogen atoms through the formation of nitrides. Therefore, it is preferable to optionally contain Nb. A lower limit for Nb of 0.3% is preferable. On the other hand, excessive addition of Nb causes a decrease in ductility, so the upper limit is 1.8%, preferably 1.5%.

### Rare Earth Elements (REM): greater than 0% to 0.5% or less

REM refers to the 18 elements including the 15 lanthanide series elements from La to Lu in the periodic table, plus Y, Hf, and Sc. The REM to be contained in the heat-resistant alloy can be mainly Ce, La, and Nd, and it is preferable that the total amount of these three elements accounts for about 80% or more of the total rare earth elements, and more preferably about 90% or more. REM dissolves in the base material and contributes to the improvement of oxidation resistance, so it is desirable to optionally contain them. To exert these effects, when adding REM, it is preferable to add an appropriate amount with an upper limit of 0.5%.

### Ti: greater than 0% to 0.5% or less, and/or Zr: greater than 0% to 0.5% or less

Ti and Zr are optionally added, either one or both, to improve oxidation resistance and high-temperature compressive creep strength. Ti is an element that easily forms carbides and also contributes to the improvement of high-temperature tensile strength. Regarding nitriding resistance, similar to Cr, it is expected to have the effect of suppressing the growth of the nitrided layer due to nitrogen diffusion by pinning nitrogen atoms through the formation of nitrides. Zr also has a denitrifying effect. To obtain these effects, Ti and Zr can be optionally added. On the other hand, Ti is also an element that easily combines with N, and it may cause deterioration of castability due to a decrease in the fluidity of the molten alloy, and there is a risk that machining may become difficult. Therefore, when added, its upper limit is 0.5%, preferably 0.3%. Since Zr reduces hot workability (e.g., bending), when added, its upper limit is 0.5%, preferably 0.4%.

### W: greater than 0% to 2.0% or less, and/or Mo: greater than 0% to 0.5% or less

W and Mo are elements with properties that dissolve in the base material, strengthen the austenite phase of the base material, and improve creep rupture strength, and either one or both can be optionally included. However, excessive content of W and Mo leads to a decrease in ductility and carburization resistance. Also, excessive content of W and Mo leads to a decrease in the oxidation resistance of the base material, and Mo exerts twice the effect of W on an equivalent basis. Therefore, the upper limit when adding W is 2.0%, and the upper limit when adding Mo is 0.5%. The upper limit for W is more preferably 1.8%, and the upper limit for Mo is more preferably 0.4%.

### Ta: 0% to 0.5%

Ta can be optionally included to form carbides with the unavoidable impurity C contained in the Ni-based alloy, thereby refining the crystal grains within the Ni-based alloy to improve the high-temperature strength and corrosion resistance of the Ni-based alloy. However, excessive content may hinder the workability of the Ni-based alloy and cause a decrease in strength. Therefore, when adding Ta, an upper limit of its content is 0.5% and more preferably 0.3%.

In one of embodiments, the heat-resistant alloy of the present invention comprises:
C: 0.45% to 0.55%,
Si: greater than 0% to 1.5% or less,
Mn: greater than 0% to 2.0% or less,
P: 0.03% or less,
S: 0.03% or less,
Ni: 33.0% to 50.0%,
Cr: 24.0% to 27.0%,
Nb: greater than 0% to 1.0% or less,
with the remainder being Fe and impurities,
and optionally including:
   Rare Earth Elements: greater than 0% to 0.5% or less,
   Ti: greater than 0% to 0.5% or less,
   W: greater than 0% to 1.0% or less, and/or Mo: greater than 0% to 0.5% or less.

In one of embodiments, the heat-resistant alloy of the present invention comprises:
C: 0.4% to 0.6%,
Si: greater than 0% to 2.0% or less,
Mn: greater than 0% to 2.0% or less,
P: 0.03% or less,
S: 0.03% or less,
Ni: 40.0% to 50.0%,
Cr: 24.0% to 38.0%,
Nb: 0.5% to 1.8%,
with the remainder being Fe and impurities,
and optionally including:
   Rare Earth Elements: greater than 0% to 0.5% or less,
   Ti: greater than 0% to 0.5% or less,
   W: greater than 0% to 1.0% or less, and/or Mo: greater than 0% to 0.5% or less.

In one of embodiments, the heat-resistant alloy of the present invention comprises:
C: 0.2% to 0.5%,
Si: greater than 0% to 2.5% or less,
Mn: greater than 0% to 2.0% or less,
P: 0.03% or less,
S: 0.03% or less,
Ni: 40.0% to 50.0%,
Cr: 30.0% to 50.0%,
with the remainder being Fe and impurities,
and optionally including:
   Nb: greater than 0% to 1.8% or less,
   Rare Earth Elements: greater than 0% to 0.5% or less,
   Ti: greater than 0% to 0.5% or less,
   W: greater than 0% to 1.0% or less, and/or Mo: greater than 0% to 0.5% or less.

The heat-resistant alloy of the present invention has excellent nitriding resistance. This is because the alloy contains a large amount of Ni, which is resistant to nitriding, forming a stable austenite phase, and because it does not contain a lot of elements that easily combine with nitrogen atoms to form nitrogen compounds. Nitriding resistance can be determined, for example, by the thickness of the nitrided layer formed on the cast body under the nitriding environment shown in the Examples below.

Furthermore, the heat-resistant alloy of the present invention contains the elements described above, and has a high activation energy for nitrogen diffusion and excellent nitriding resistance. This can reduce the amount of nitrogen penetrating the cast body in a nitriding environment and prevent the thickening of the nitrided layer. The activation energy for nitrogen diffusion is preferably 35 kJ/mol or more, more preferably 38 kJ/mol or more, and even more preferably 40 kJ/mol or more. A higher activation energy for nitrogen diffusion is preferable. However, referring to the Second Example, the upper limit is 100 kJ/mol, preferably 80 kJ/mol.

The method for deriving the activation energy of nitrogen diffusion is as follows. The heat-resistant alloy is exposed to a nitriding atmosphere at different temperatures, and the diffusion coefficient D at each temperature is derived according to the parabolic rule of diffusion. Next, an Arrhenius plot is created from the reciprocal of the temperature and the natural logarithm of the diffusion coefficient D. Then, the activation energy of the heat-resistant alloy was derived from the slope of the Arrhenius plot. The diffusion coefficient D was derived by taking data at multiple points in the range of 600 ^{O}C to 950 °C.

The heat-resistant alloy of the present invention has excellent creep rupture strength, especially high-temperature creep rupture strength. This is because it contains C, Ni, and optionally Nb and Ti. When used as a cracking tube in an ammonia gas thermal cracking apparatus, the creep rupture strength is preferably such that the rupture time is 1000 hours or more at a test temperature of 900 °C and a stress of 20 MPa, desirably 1000 hours or more at a test temperature of 900 °C and a stress of 25 MPa, and more desirably 1000 hours or more at a test temperature of 900 °C and a stress of 30 MPa.

The heat-resistant alloy of the present invention also has excellent castability. This is due to the component design that optimizes the content of alloying elements such as Ni and Cr and takes melt flowability into consideration. A cast body made of the heat-resistant alloy of the present invention can be produced by blending the component elements to be within the above composition range and using a casting method such as centrifugal casting or static casting.

As described above, the heat-resistant alloy of the present invention is excellent in nitriding resistance, high-temperature creep rupture strength, and also in castability. Therefore, it is suitable for application to cracking tubes of ammonia gas thermal cracking apparatuses used in nitriding environments where high-pressure ammonia gas is supplied in a high-temperature atmosphere of 500 ^{O}C or higher. Among them, a cracking tube made of the heat-resistant alloy of the present invention is particularly suitable for application in ammonia gas thermal cracking apparatuses used in high-pressure processes, which is advantageous for reducing the volume of mass production facilities and for supplying to downstream processes such as power generation.

### EXAMPLES

### <<First Example>>

Cracking tubes with the alloy compositions (unit: mass %, remainder Fe and impurities) of Inventive Examples 1 to 3 and Comparative Examples 1 to 3 shown in Table 1 were produced by centrifugal casting, and their castability was checked. Comparative Example 1 is SUS310S, Comparative Example 2 is Inconel 625 (registered trademark), and Comparative Example 3 is Hastelloy C276 (registered trademark).

**Table 1**

| | C | Si | Mn | P | S | Ni | Cr | Nb | Ti | W | REM |
|---|---|---|---|---|---|---|---|---|---|---|---|
| Inventive Ex. 1 | 0.5 | 0.8 | 0.8 | 0.01 | 0.01 | 35 | 25 | 0.5 | 0.15 | 0 | 0 |
| Inventive Ex. 2 | 0.5 | 1.6 | 1 | 0.01 | 0.01 | 45 | 31 | 0.8 | 0.15 | 0 | 0 |
| Inventive Ex. 3 | 0.3 | 2.2 | 0.8 | 0.005 | 0.01 | 48 | 41 | 0 | 0.2 | 1 | 0 |
| Compar. Ex. 1 | 0.01 | 0.3 | 1 | 0.02 | 0.001 | 20 | 24 | 0 | 0 | 0 | 0 |
| Compar. Ex. 2 | 0.015 | 0.2 | 0.1 | 0.005 | 0.001 | 61 | 21.5 | 3.6 | 0.2 | 0 | 0.02 |
| Compar. Ex. 3 | 0.01 | 0.1 | 1 | 0.04 | 0.01 | 55 | 16 | 0 | 0 | 0 | 0 |

Test pieces were cut from each of the obtained cracking tubes, and a creep rupture test and an ammonia exposure test were conducted. The details of the tests are described below, and the results are shown in Table 2.

**Table 2**

| | Creep Rupture Strength at 900 °C for 1000 h (MPa) | Nitrided Layer Thickness at 600 °C for 100h (µm) |
|---|---|---|
| Inventive Ex. 1 | 53.9 | 80.5 |
| Inventive Ex. 2 | 46.9 | 22.1 |
| Inventive Ex. 3 | 35.9 | 0 |
| Compar. Ex. 1 | 8.0 | 108.1 |
| Compar. Ex. 2 | 18.6 | 12.0 |
| Compar. Ex. 3 | about 20 | 20.2 |

The heat-resistant alloy of the present invention contains slightly higher amounts of carbon and silicon to optimize castability, and it exhibits superior castability compared to the materials listed as comparative examples. For production by the centrifugal casting method, excellent castability, i.e., good melt flowability, is desirable, and the heat-resistant alloy of the present invention is reasonable in this respect. The evaluation of castability is performed in the Second Example.

Furthermore, the heat-resistant alloy of the present invention has excellent high-temperature oxidation resistance. Elements that contribute to high-temperature oxidation resistance are Ni and Cr. Ni itself is an element having high high-temperature oxidation resistance. Cr forms a chromium oxide film on the surface to protect the surface and suppress the oxidation of the material.

The heat-resistant alloy of the present invention contains Ni and Cr in almost similar amounts. Therefore, it is possible to have excellent high-temperature oxidation resistance with other properties such as high creep rupture strength.

### <Creep Rupture Strength Test>

The creep rupture strength of the test pieces at a temperature of 900 °C for 1000 hours was measured in accordance with JIS Z 2271. The results are shown in Table 2. Note that the value for Comparative Example 2 is at 927 ^{O}C.

The creep rupture strength is preferably 20 MPa or more, desirably 25 MPa or more, and more desirably 30 MPa or more. Referring to Table 2, it can be seen that all Inventive Examples have a creep rupture strength of at least 30 MPa, indicating that they have sufficient creep rupture strength. On the other hand, Comparative Examples 1 and 2 showed low creep rupture strength. Comparative Example 3 was approximately 20 MPa.

### <Ammonia Exposure Test>

The test piece was placed in a furnace tube located inside an electric furnace, and the inside of the furnace tube was replaced with nitrogen gas. Then, after raising the temperature of the furnace tube to 600 ^{O}C, it was replaced with ammonia gas. The test piece was exposed to ammonia gas for 100 hours and then taken out.

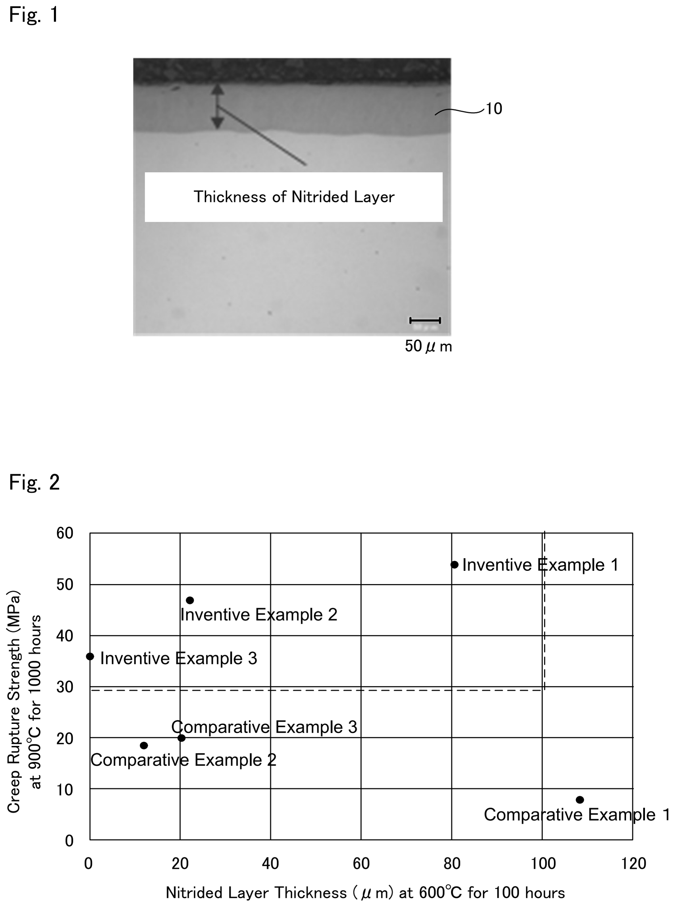

Each of the test pieces was then polished in the thickness direction, and the cross-section was observed with an optical microscope to measure the thickness of the nitrided layer. The results are shown in Table 2. For reference, a microstructural cross-sectional photograph of the test piece of Comparative Example 1 is shown in Figure 1. The part indicated by reference numeral 10 is the nitrided layer.

Regarding nitriding properties, if the thickness of the nitrided layer formed by the ammonia exposure test is 100 µm or less, it can be determined that the nitriding resistance is good. Referring to Table 2, it can be seen that Inventive Examples 1 to 3, Comparative Example 2, and Comparative Example 3 have a nitrided layer thickness of 100 µm or less, indicating excellent nitriding resistance. On the other hand, Comparative Example 1, as shown in Figure 1, has a nitrided layer 10 with a thickness exceeding 100 µm, indicating poor nitriding resistance. As for the Inventive Example 3, no nitrided layer was observed, indicating extremely excellent nitriding resistance. In Inventive Examples 1 and 2, a nitrided layer was formed, but in Invention Example 2 was as thin as 22.1 µm, and Inventive Example 1 was also 100 µm or less, showing good nitriding resistance.

### <Creep Rupture Strength and Nitriding Resistance>

The creep rupture strength and the thickness of the nitrided layer formed by the ammonia exposure test for each of the test pieces described above were plotted on a graph with the creep rupture strength on the vertical axis and the nitrided layer thickness on the horizontal axis. The graph is shown in Figure 2.

In the graph of Figure 2, the further to the upper left, the better the creep rupture strength and the better the nitriding resistance. Inventive Examples 1 to 3 are located in the upper left of the graph, showing that they are excellent in creep rupture strength and nitriding resistance. In Figure 2, indicated by a dotted line is the range consisting of a nitrided layer thickness of 100 µm or less, which is considered to have nitriding resistance, and a more desirable lower limit for creep rupture strength of 30 MPa or more. All of the Inventive Examples are inside the dotted line, while all of the Comparative Examples are outside the dotted line.

### <<Second Example>>

For the test pieces of Inventive Examples 1 to 3 and Comparative Examples 1 and 2 produced in the First Example, the activation energy of nitrogen diffusion was derived, and castability was investigated.

### <Activation Energy>

The method for deriving the activation energy of nitrogen diffusion is as described above. The results are shown in Table 3. It was found that Inventive Examples 1 to 3 all have high activation energy for nitrogen diffusion. In particular, Inventive Example 3 showed a higher value compared to Inventive Examples 1 and 2. Comparative Example 2 also had a high activation energy for nitrogen diffusion. Table 3 includes the nitrided layer thickness from the First Example, and it can be seen that the higher the activation energy, the thinner the nitrided layer.

**Table 3**

| | Activation Energy (kJ/mol) | Nitrided Layer Thickness at 600 °C for 100h (µm) | Creep Rupture Strength at 900 °C for 1000h (MPa) | Castability |
|---|---|---|---|---|
| Inventive Ex. 1 | 38.2 | 80.5 | 53.9 | Good |
| Inventive Ex. 2 | 47.9 | 22.1 | 46.9 | Good |
| Inventive Ex. 3 | 63.7 | 0 | 35.9 | Good |
| Compar. Ex. 1 | 31.4 | 108.1 | 8.0 | Fair |
| Compar. Ex. 2 | 41.5 | 12.0 | 18.6 | Poor |

### <Creep Rupture Strength and Activation Energy>

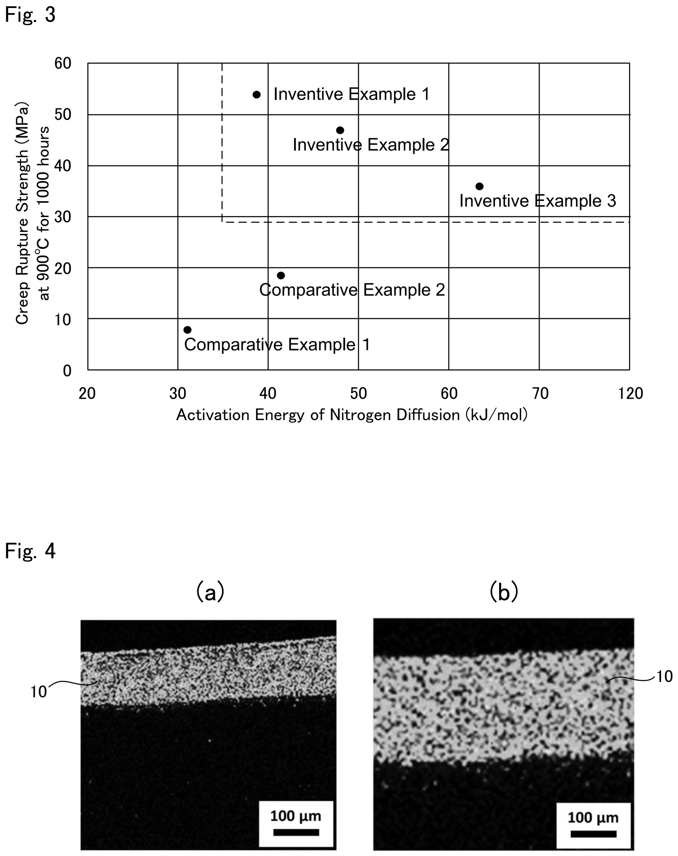

Figure 3 shows a graph plotting creep rupture strength on the vertical axis and activation energy of nitrogen diffusion on the horizontal axis. The creep rupture strength values are those measured in the First Example (see Table 3). In the graph of Figure 3, the further to the upper right, the better the creep rupture strength and the higher the activation energy for nitrogen diffusion, thus the better the nitriding resistance. Inventive Examples 1 to 3 are located in the upper right of the graph, indicating that they are excellent in creep rupture strength and nitriding resistance. Indicated by a dotted line in Figure 3 is the range defined by a desirable lower limit for the activation energy of nitrogen diffusion of 35 kJ/mol or more, which is considered to have nitriding resistance, and a more desirable lower limit for creep rupture strength of 30 MPa or more. All of the Inventive Examples are inside the dotted line, while all of the Comparative Examples are outside the dotted line.

### <Castability>

Castability was judged by observing the surface condition of the test pieces to assess the melt flowability. The evaluation of castability is in three grades: "Good", "Fair", and "Poor". Referring to Table 3, Inventive Examples 1 to 3 all have good castability. This is due to the slightly higher addition of carbon and silicon. Comparative Example 2 has a relatively high activation energy but is poor in castability.

### <EPMA Analysis>

For the test pieces of Inventive Example 1 and Comparative Example 1, the ammonia exposure test of the First Example was conducted by changing the temperature condition to 850 °C. The other conditions were the same as in the First Example. The nitrogen distribution in the obtained test pieces was analyzed by EPMA (Electron Probe Microanalyzer). Figure 4 shows (a) EPMA image of Inventive Example 1 and (b) EPMA image of Comparative Example 1. Referring to the figures (reference sign 10 is a nitrided layer and the area below it is a test piece), the nitrided layer 10 is observed in both test pieces. But as Inventive Example 1 has a high activation energy for nitrogen diffusion, it can be seen that the formed nitrided layer 10 is sufficiently thinner compared to Comparative Example 1.

The above description is for the purpose of explaining the present invention and should not be construed as limiting the invention described in the claims or narrowing its scope. Furthermore, it goes without saying that the configuration of each part of the present invention is not limited to the above-described examples, and various modifications are possible within the technical scope described in the claims.

## Claims

1. A heat-resistant alloy having nitrogen resistance, the alloy comprising, in mass %:
C: 0.2% to 0.6%,
Si: greater than 0% to 2.5% or less,
Mn: greater than 0% to 2.0% or less,
P: 0.03% or less,
S: 0.03% or less,
Ni: 33.0% to 50.0%,
Cr: 24.0% to 50.0%,
the remainder being Fe and impurities, and
optionally including:
Nb: greater than 0% to 1.8% or less,
Rare earth elements: greater than 0% to 0.5% or less,
Ti: greater than 0% to 0.5% or less and/or Zr: greater than 0% to 0.5% or less, and
W: greater than 0% to 2.0% or less and/or Mo: greater than 0% to 0.5% or less.

2. The heat-resistant alloy according to claim 1 wherein
C: 0.45% to 0.55%,
Si: greater than 0% to 1.5% or less,
Ni: 33.0% to 50.0%,
Cr: 24.0% to 27.0%,
Nb: greater than 0% to 1.0% or less.

3. The heat-resistant alloy according to claim 1 wherein
C: 0.4% to 0.6%,
Si: greater than 0% to 2.0% or less,
Ni: 40.0% to 50.0%,
Cr: 24.0% to 38.0%,
Nb: 0.5% to 1.8%.

4. The heat-resistant alloy according to claim 1 wherein
C: 0.2% to 0.5%,
Ni: 40.0% to 50.0%,
Cr: 30.0% to 50.0%,
and optionally, Ti: greater than 0% to 0.4% or less.

5. The heat-resistant alloy according to any one of claims 1 to 4 wherein
a creep rupture strength is 20 MPa or more at 900 °C for 1000 hours.

6. The heat-resistant alloy according to any one of claims 1 to 4 wherein
an activation energy for nitrogen diffusion is 35 kJ/mol or more.

7. The heat-resistant alloy according to any one of claims 1 to 4 wherein
the heat-resistant alloy is a centrifugally cast body.

8. The heat-resistant alloy according to any one of claims 1 to 4 wherein
the heat-resistant alloy is used in a high-temperature atmosphere of 500 °C or higher.

9. A cracking tube for an ammonia gas thermal cracking apparatus formed from the heat-resistant alloy according to any one of claims 1 to 4.
